# EUROPÄISCHE PATENTSCHRIFT

(11) **EP 3 953 774 B1**
(45) Veröffentlichungstag und Bekanntmachung des Hinweises auf die Patenterteilung: **01.03.2023**
(21) Anmeldenummer: 20728679.0
(22) Anmeldetag: 06.05.2020
(51) Int. Cl.: G05B 19/042, G05B 19/418

(54) **VORRICHTUNG ZUM AUFFINDEN VON ALARMURSACHEN**
DEVICE FOR RETREIVING ALARM CAUSES
DISPOSITIF POUR LA DÉTECTION DE CAUSES D'ALARMES

(30) Priorität: 07.05.2019 EP 19173091
(43) Veröffentlichungstag der Anmeldung: 16.02.2022
(73) Patentinhaber: Siemens Aktiengesellschaft, 80333 München (DE)
(72) Erfinder: LUTZ, Benjamin, 76327 Pfinztal (DE)
(86) Internationale Anmeldenummer: PCT/EP2020/062604
(87) Internationale Veröffentlichungsnummer: WO 2020/225316

(56) Entgegenhaltungen:
- EP-A1- 3 151 217
- EP-A1- 3 361 341

## Beschreibung

Die Erfindung betrifft einen Operator Station Server eines Leitsystems einer verfahrenstechnischen Anlage mit den Merkmalen des Anspruchs 1. Außerdem betrifft die Erfindung ein Leitsystem für eine verfahrenstechnische Anlage gemäß Anspruch 4.

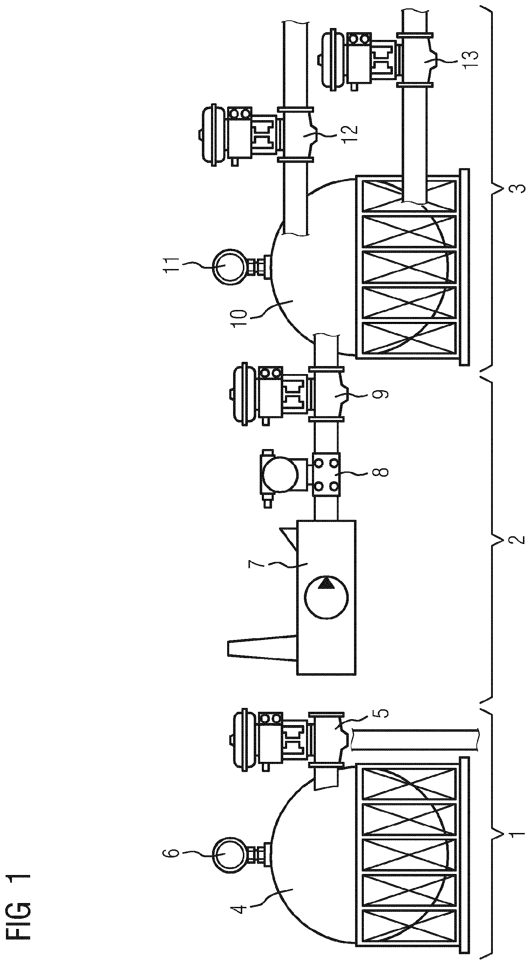

In FIG 1 ist ein vereinfachter Auszug einer verfahrenstechnischen Anlage zur Speicherung und Verteilung von Gas gezeigt. Die Anlage ist in drei Teilanlagen 1, 2, 3 unterteilt. Die erste Teilanlage 1 weist eine erste Druckkammer 4 und ein damit verbundenes erstes Ablassventil 5 auf. Zudem weist die erste Druckkammer 4 einen ersten Drucksensor 6 auf. Die zweite Teilanlage umfasst einen Kompressor 7, der über einen ersten Durchflusssensor 8 mit einem Einlassventil 9 verbunden ist. Die dritte Teilanlage 3 weist eine mit dem Einlassventil 9 verbundene zweite Druckkammer 10 auf. Die zweite Druckkammer 10 weist einen zweiten Drucksensor 11 auf und ist mit einem zweiten Ablassventil 12 und einem dritten Ablassventil 13 verbunden.

Alle dargestellten technischen Objekte 4-13 der Anlage werden durch verschiedene Prozessobjekte eines die Anlage steuernden Leitsystems automatisiert. Dem Kompressor 7 kann beispielsweise ein Prozessobjekt "Motorsteuerung", dem Einlassventil 9 ein Prozessobjekt "Einlassventilregelung" usw.

Die dargestellten technischen Objekte 4-6 der ersten Teilanlage 1 sowie die technischen Objekte 7-13 der zweiten und dritten Teilanlage 2, 3 befinden sich jeweils an einem "verfahrenstechnischen Strang", d.h. sie stehen in unmittelbarer Abhängigkeit zueinander bzw. weisen Wirkverbindungen miteinander auf.

Die verfahrenstechnische Abhängigkeit steht in direktem Zusammenhang mit dem Alarmmanagement zwischen den Prozessobjekten - durch einen Fehler im Kompressor reduziert sich der Durchfluss, es kommt zu einem Druckabfall, usw. Für die Bedienung und Beobachtung verfahrenstechnischer Anlagen werden symbolische Anlagenbilder erstellt, die die verfahrenstechnischen Zusammenhänge abstrahiert darstellen. Aufgrund ihrer Komplexität müssen Anlagenbilder oftmals stark vereinfacht werden, so dass der verfahrenstechnische Zusammenhang oftmals verloren geht, was die Evaluierung eines Alarmschwallverursachers erschwert.

In der EP 3 361 341 A1 ist ein Verfahren zur Überwachung der Zustände von Geräten eines Automatisierungssystems offenbart.

Die EP 3 151 217 A1 zeigt ein Operator-Training System zur Schulung eines Operators in Hinblick auf das Bedienen und Beobachten eines mittels einer Automatisierungseinrichtung zu steuernden technischen Prozesses.

Der Erfindung liegt die Aufgabe zugrunde, eine Vorrichtung zum Bedienen und Beobachten einer verfahrenstechnischen Anlage anzugeben, die ein Auffinden von Alarmursachen und Alarmabhängigkeiten zwischen verschiedenen Prozessobjekten einer verfahrenstechnischen Anlage schneller und effizient gestaltet - ohne dass dabei zusätzliche Analysewerkzeuge wie beispielweise Meldefolgeanzeigen benötigt werden.

Diese Aufgabe wird gelöst durch einen Operator Station Server eines Leitsystems einer verfahrenstechnischen Anlage, insbesondere Fertigungs- oder Prozessanlage, mit den Merkmalen des Anspruchs 1. Zudem wird die Aufgabe gelöst durch ein Leitsystem für eine verfahrenstechnische Anlage gemäß Anspruch 4. Vorteilhafte Weiterbildungen ergeben sich aus den abhängigen Ansprüchen.

Ein erfindungsgemäßer Operator Station Server eines Leitsystems einer verfahrenstechnischen Anlage weist ein computerimplementiertes Prozessabbild auf, wobei das computerimplementierte Prozessabbild zu einer Laufzeit der verfahrenstechnischen Anlage wenigstens ein erstes computerimplementiertes Prozessobjekt, ein zweites computerimplementiertes Prozessobjekt und weitere computerimplementierte Prozessobjekte umfasst, die jeweils einem technischen Objekt der verfahrenstechnischen Anlage zugeordnet sind und mit diesem in Wirkverbindung stehen, wobei der Operator Station Server einen Visualisierungsdienst umfasst, der dazu ausgebildet ist, ein symbolisches Anlagenbild an einen Operator Station Client zur Visualisierung zu übertragen, um in dem Anlagenbild aus dem ersten Prozessobjekt und dem zweiten Prozessobjekt erzeugte Blocksymbole darzustellen. Der Operator Station Server ist dadurch gekennzeichnet, dass das erste Prozessobjekt eine strukturierte und richtungsorientierte Referenz auf das zweite Prozessobjekt aufweist,
wobei der Visualisierungsdienst dazu ausgebildet und vorgesehen ist, die strukturierte und richtungsorientierte Referenz dazu zu verwenden, eine Abhängigkeit von aus dem ersten Prozessobjekt und dem zweiten Prozessobjekt in dem symbolischen Anlagenbild erzeugten Blocksymbolen zu ermitteln, um einen verfahrenstechnischen Strang für das Anlagenbild abzuleiten, wobei der Visualisierungsdienst weiterhin dazu ausgebildet ist, auch weitere Prozessobjekte für die Ableitung des verfahrenstechnischen Strangs miteinzubeziehen, von denen im Anlagenbild keine Blocksymbole angezeigt werden, wobei für die weiteren Prozessobjekte die Anlagenbilder ermittelt werden, in denen die weiteren Prozessobjekte vorhanden sind,
und wobei der Visualisierungsdienst weiterhin dazu ausgebildet ist, Alarme für alle Blocksymbole zu berechnen und zu aktualisieren, und mit den ermittelten Anlagenbildern und Alarmen zur Laufzeit Bildwechselbuttons im aktuell geöffneten Anlagenbild anzulegen, um entlang des abgeleiteten verfahrenstechnischen Stranges von Anlagenbild zu Anlagenbild navigieren zu können.

Bei der verfahrenstechnischen Anlage kann es sich um eine Anlage aus der Prozessindustrie wie beispielsweise eine chemische, pharmazeutische, petrochemische oder eine Anlage aus der Nahrungs- und Genussmittelindustrie handeln.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei einem technischen Objekt kann es sich um einzelne Sensoren oder Aktoren der verfahrenstechnischen Anlage handeln. Ein technisches Objekt kann aber auch ein Zusammenschluss mehrerer Sensoren und/oder Aktoren sein, beispielsweise ein Motor, ein Reaktor, eine Pumpe oder ein Ventilsystem.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer verfahrenstechnischen Anlage erfasst und Benutzern zur Verfügung stellt. Der Operator Station Server stellt in der Regel eine Kommunikationsverbindung zu Automatisierungssystemen der verfahrenstechnischen Anlage her und gibt Daten der verfahrenstechnischen Anlage an sogenannte Operator Station Clients weiter, die zur Bedienung und Beobachtung eines Betriebs der einzelnen Funktionselemente der verfahrenstechnischen Anlage dienen. Bei dem Operator Station Server kann es sich, ohne sich darauf zu beschränken, um einen SIMATIC PCS 7 Industrial Workstation Server von SIEMENS handeln.

Der Operator Station Server weist ein Prozessabbild auf, d.h. auf dem Server ist ein aktueller Zustand der technischen Objekte der verfahrenstechnischen Anlage zur Laufzeit der Anlage hinterlegt. Das Prozessabbild umfasst wenigstens ein erstes computerimplementiertes Prozessobjekt und ein zweites computerimplementiertes Prozessobjekt.

Um die unterschiedlichen Prozessobjekte der verfahrenstechnischen Anlage zur Laufzeit in einen relationalen Bezug zu einer Abbildung eines verfahrenstechnischen Strangs der Anlage bringen zu können, sind gemäß der Erfindung die Prozessobjekte in dem Prozessabbild des Operator Station Servers Referenzen erweitert.

Bei der Referenz handelt es sich vorliegend um einen strukturierten und richtungsorientierten Verweis auf ein anderes Prozessobjekt. Die Werte der strukturierten Referenz können in einer Engineering-Phase beispielsweise aus CFC-Plänen (Continuous Functional Chart) oder tabellarischen Relationsmatrizen abgeleitet und in die Konfiguration des Operator Station Servers integriert worden sein.

Der erfindungsgemäße Operator Station Server ist in der Lage, Informationen zu verfahrenstechnischen Strängen zwischen den einzelnen Prozessobjekten dynamisch zu einer Laufzeit der verfahrenstechnischen Anlage zu ermitteln und an eine etwaige nachgeschaltete Einrichtung zum Bedienen und Beobachten weiterzuleiten.

Im Rahmen einer bevorzugten Weiterbildung der Erfindung sind in dem Operator Station Server Informationen darüber hinterlegt, welcher Art die Wirkverbindung zwischen den beiden, dem ersten und zweiten Prozessobjekt zugeordneten, technischen Objekten ist. Die Wirkverbindung zwischen einem ersten und einem zweiten Tank (als technischen Objekten) kann beispielsweise darin bestehen, dass ein Fluid aus dem ersten Tank in den zweiten Tank fließen kann.

Bevorzugt weist das erste Prozessobjekt neben der Referenz auf das zweite Prozessobjekt weitere Referenzen auf weitere Prozessobjekte auf, wobei die Prozessobjekte jeweils einem technischen Objekt der verfahrenstechnischen Anlage zugeordnet sind und mit diesem in Wirkverbindung stehen,
und wobei die den weiteren Prozessobjekten zugeordneten technischen Objekte in einer Wirkverbindung mit dem, dem ersten Prozessobjekt zugeordneten, technischen Objekt stehen,
und wobei dem ersten Prozessobjekt Informationen darüber zugeordnet sind, wie viele Referenzen auf die weiteren Prozessobjekte das erste Prozessobjekt aufweist.

Der Operator Station Server ist in der Lage die Abhängigkeit aus den Prozessobjekten der in einem Anlagenbild vorhandenen Symbole zu ermitteln - sozusagen den verfahrenstechnischen Strang abzuleiten.

Ganz besonders bevorzugt weist der Operator Station Server einen Operator Station Client auf, wobei der Operator Station Client dazu vorgesehen und ausgebildet ist, während einer Laufzeit der verfahrenstechnischen Anlage Visualisierungsinformationen von dem Operator Station Server zu empfangen, um wenigstens das erste und das zweite Prozessobjekt und die Wirkverbindung zwischen den beiden, dem ersten und zweiten Prozessobjekt zugeordneten technischen Objekten in Form von symbolischen Anlagenbildern visuell darzustellen,
und wobei der Operator Station Client dazu vorgesehen und ausgebildet ist, während der Laufzeit der technischen Anlage wenigstens eine erste visuelle Darstellung, die wenigstens ein zu dem ersten Prozessobjekt gehöriges symbolisches Anlagenbild umfasst, und eine zweite visuelle Darstellung, die wenigstens ein zu dem zweiten Prozessobjekt gehöriges symbolische Anlagenbild umfasst, zu erzeugen,
wobei die erste visuelle Darstellung eine Darstellungsreferenz auf die zweite visuelle Darstellung aufweist, und umgekehrt,
wobei ein Operator der verfahrenstechnischen Anlage zwischen einer Anzeige der beiden visuellen Darstellungen wechseln kann, indem er die jeweilige Darstellungsreferenz anwählt.

Unter einem Operator wird ein menschlicher Bediener der verfahrenstechnischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator ein Bedien- und Beobachtungssystem des Leitsystems nutzen.

Mit den zur Laufzeit der Anlage dynamisch angelegten "Bildwechselbuttons" kann der Operator entlang des abgeleiteten verfahrenstechnischen Stranges von Anlagenbild zu Anlagenbild navigieren, um beispielsweise die Ursache eines Alarmschwalls oder dergleichen schnell und effizient identifizieren zu können.

Der Ausdruck "dem Leitsystem bekannt" meint dabei, dass dem Leitsystem, bzw. genauer einem Visualisierungsdienst des Leitsystems, Informationen über die jeweiligen Datenstrukturtypen bekannt sind, um diese an einen angeschlossenen Operator Station Client zur grafischen Darbietung übertragen zu können.

Die oben formulierte Aufgabe wird zudem gelöst durch ein Leitsystem für eine verfahrenstechnische Anlage, das wenigstens einen Operator Station Server wie zuvor erläutert aufweist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird.

Es zeigen:
- FIG 2: ein erfindungsgemäßes Leitsystem in einem Blockschaltbild;
- FIG 3: ein erstes Anlagenbild einer verfahrenstechnischen Anlage;
- FIG 4: das Anlagenbild gemäß FIG 3 in einer überarbeiteten Gestaltungsform; und
- FIG 5: ein zweites Anlagenbild der verfahrenstechnischen Anlage.

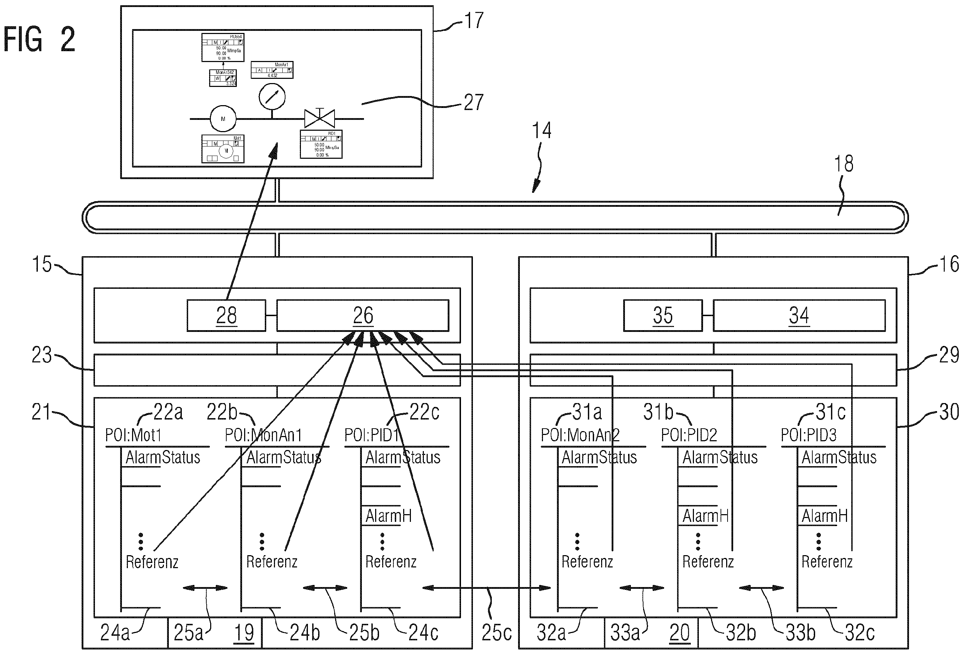

In FIG 2 ist ein Teil eines erfindungsgemäßen Leitsystems 14 einer als verfahrenstechnische Anlage ausgebildeten technischen Anlage dargestellt. Das Leitsystem 14 umfasst einen ersten Server eines Bediensystems bzw. einen Operator Station Server 15 und einen zweiten Operator Station Server 16. Zudem weist das Leitsystem einen Operator Station Client 17 auf. Der erste Operator Station Server 15, der zweite Operator Station Server 16 und der Operator Station Client 17 sind über einen Terminalbus 18 miteinander und mit nicht dargestellten weiteren Komponenten des Leitsystems 14 wie einem Engineering System Server oder einem Prozessdatenarchiv verbunden.

Ein Benutzer bzw. Operator hat mittels des Operator Station Clients 17 mittels des Terminalbus 18 im Kontext eines Bedienens und Beobachtens Zugriff auf den ersten Operator Station Server 15 sowie auf den zweiten Operator Station Server 16. Der Terminalbus 18 kann, ohne sich darauf zu beschränken, beispielsweise als Industrial Ethernet ausgebildet sein.

Der erste Operator Station Server 15 weist eine erste Geräteschnittstelle 19 auf, die mit einem nicht dargestellten Anlagenbus verbunden werden kann. Hierüber kann der erste Operator Station Server 15 mit einem (externen) Gerät oder einer Applikation, insbesondere Webapplikation, kommunizieren. Analog dazu weist der zweite Operator Station Server 16 eine zweite Geräteschnittstelle 20 auf, die ebenfalls mit einem nicht dargestellten Anlagenbus verbunden werden kann.

Der erste Operator Station Server 15 weist ein erstes computerimplementiertes Prozessabbild (Process Image) 21 auf, in welchem zu einer Laufzeit der verfahrenstechnischen Anlage empfangene Prozesswerte hinterlegt sind. Weiterhin umfasst der erste Operator Station Server 15 einen Visualisierungsdienst 23 zur Ausgabe von Visualisierungsinformationen an den Operator Station Client 17.

In dem Prozessabbild 21 sind die Prozesswerte verschiedenen computerimplementierten Prozessobjekten 22a, 22b, 22c zugeordnet. Die computerimplementierten Prozessobjekte 22a, 22b, 22c sind jeweils einem technischen Objekt der verfahrenstechnischen Anlage zugeordnet und stehen mit diesen entsprechend in einer Wirkverbindung. Dies bedeutet, dass beispielweise in dem zugeordneten technischen Objekt entstehenden Sensorwerte in dem dazugehörigen Prozessobjekt 22a, 22b, 22c abgebildet werden. Die Prozessobjekte 22a, 22b, 22c sind in FIG 2 mit den Bezeichnungen "POI:Mot1", "POI:MonAn1" und "POI:PID1" versehen. Jedes Prozessobjekt 22a, 22b, 22c weist eine Anzahl an zugeordneten Parametern auf, die in FIG 2 mit "AlarmStatus", "PV_Out", "SP_Out" usw. bezeichnet werden.

Jedes Prozessobjekt 22a, 22b, 22c weist eine strukturierte und richtungsorientierte Referenz 24a, 24b, 24c auf, die in FIG 2 mit "Dependency Tag Struct" bezeichnet ist. Die Werte der strukturierten "Dependency Tag" Referenzen 24a, 24b, 24c sind in der Engineering-Phase aus CFC-Plänen abgeleitet und entsprechend in die Konfigurationen des ersten Operator Station Servers 15 geladen worden. Jede strukturierte und richtungsorientierte "Dependency Tag" Referenz 24a, 24b, 24c im Prozessabbild 21 des ersten Operator Station Servers 15 verfügt über folgende Inhalte:
- Eine Referenz auf ein in Abhängigkeit stehendes Prozessobjekt 22a, 22b, 22c (was in FIG 2 durch Doppelpfeile 25a, 25b, 25c symbolisiert ist). Der Ausdruck "in "Abhängigkeit stehend" bedeutet dabei, dass die zugeordneten technischen Objekte in einer Wirkverbindung innerhalb der verfahrenstechnischen Anlage stehen (beispielsweise "Einlassöffnung" und "Druckkammer"). Die Art der Wirkverbindung zwischen den Prozessobjekten 22a, 22b, 22c ist ebenfalls in dem Operator Station Server 15 hinterlegt.
- Eine Definition der Abhängigkeit "links" oder "rechts" entlang eines verfahrenstechnischen Strangs der verfahrenstechnischen Anlage
- Anzahl der Referenzen nach "links" oder "rechts" entlang des verfahrenstechnischen Strangs

Der Visualisierungsdienst 23 erzeugt (unter anderem) aus den in dem Prozessabbild 21 hinterlegten Informationen ein symbolisches Anlagenbild 27, das zur Visualisierung an den Operator Station Client 17 übertragen wird. Eine erste Softwarekomponente 26 des Visualisierungsdienstes 23 verwendet dabei die Referenzen 24a, 24b, 24c dazu, eine Abhängigkeit von aus den Prozessobjekten 22a, 22b, 22c in dem symbolischen Anlagenbild 27 erzeugten Blocksymbolen zu ermitteln - um sozusagen den verfahrenstechnischen Strang für das Anlagenbild ab27 zuleiten. Eine zweite Softwarekomponente 28 des Visualisierungsdienstes 23 (ein sogenanntes "Screen Object Model" oder kurz SOM) dient der Erzeugung der Blocksymbole für die Prozessobjekte 22a, 22b, 22c zur Darstellung in dem Anlagenbild 27.

Die erste Softwarekomponente 26 berechnet den gesamten verfahrenstechnischen Strang, d.h. auch Prozessobjekte 22a, 22b, 22c werden für die Berechnung des Strangs miteinbezogen, von denen im aktuell dargestellten Anlagenbild 27 keine Blocksymbole angezeigt werden. Sind im verfahrenstechnischen Strang Prozessobjekte 22a, 22b, 22c enthalten, deren Blocksymbole nicht im aktuellen Anlagenbild 27 vorhanden sind, werden für diejenigen Prozessobjekte 22a, 22b, 22c die Anlagenbilder 27 ermittelt, in denen sie vorhanden sind.

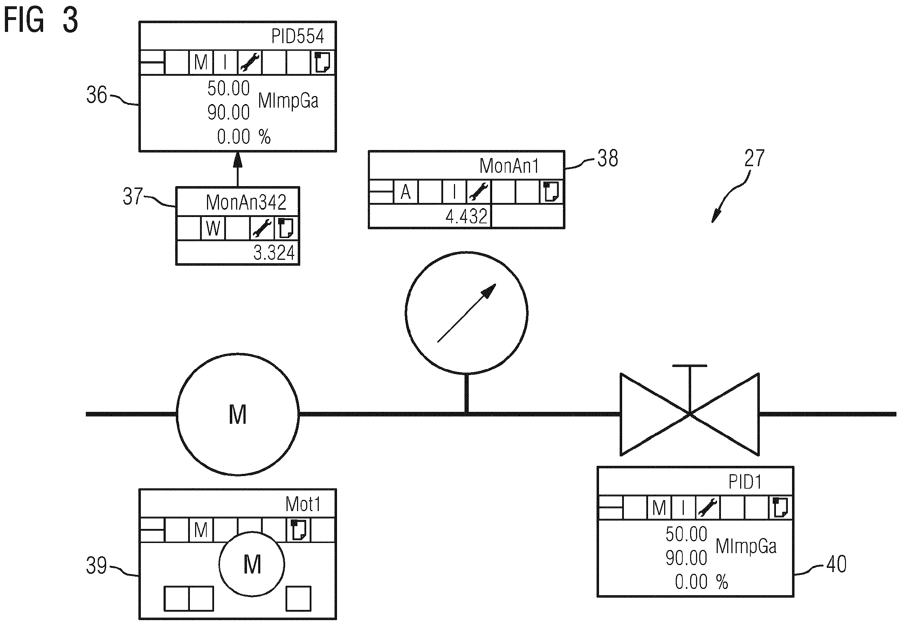

Für ermittelten Anlagenbilder 27 werden Gruppenalarme für die jeweils betroffenen Prozessobjekte 22a, 22b, 22c (d.h. deren Blocksymbole in dem jeweiligen Anlagenbild 27 dargestellt werden) berechnet und aktualisiert. Mit den ermittelten Anlagenbildern 27 und Gruppenalarmen können dann zur Laufzeit "Bildwechselbuttons" dynamisch im aktuell geöffneten Anlagenbild 27 angelegt werden, um entlang des abgeleiteten verfahrenstechnischen Stranges von Anlagenbild 27 zu Anlagenbild 27 navigieren zu können. In den FIG 3 -7 wird dieser Aspekt noch deutlicher veranschaulicht.

Der zweite Operator Station Server 16 weist analog zu dem ersten Operator Station Server 15 ein zweites computerimplementiertes Prozessabbild (Process Image) 30 auf, in welchem zu einer Laufzeit der verfahrenstechnischen Anlage empfangene Prozesswerte hinterlegt sind. Weiterhin umfasst der zweite Operator Station Server 16 einen Visualisierungsdienst 29 zur Ausgabe von Visualisierungsinformationen an den Operator Station Client 17.

In dem Prozessabbild 30 sind die Prozesswerte verschiedenen computerimplementierten Prozessobjekten 31a, 31b, 31c zugeordnet. Die computerimplementierten Prozessobjekte 31a, 31b, 31c sind jeweils einem technischen Objekt der verfahrenstechnischen Anlage zugeordnet und stehen mit diesen entsprechend in einer Wirkverbindung. Die Prozessobjekte 31a, 31b, 31c sind in FIG 2 mit den Bezeichnungen "POI:MonAn2", "POI:PID2" und "POI:PID3" versehen. Jedes Prozessobjekt 31a, 31b, 31c weist eine Anzahl an zugeordneten Parametern auf, die in FIG 2 mit "AlarmStatus", "PV_Out", "SP_Out" usw. bezeichnet werden.

Jedes Prozessobjekt 31a, 31b, 31c weist eine strukturierte und richtungsorientierte Referenz 32a, 32b, 32c auf, die in FIG 2 mit "Dependency Tag Struct" bezeichnet ist (Die Abhängigkeit ist mit Doppelpfeilen 33a, 33b, 24c gekennzeichnet). In FIG 2 ist zu erkennen, dass sich die Referenzen 24a, 24b, 24c, 32a, 32b, 32c (hier mit dem Doppelpfeil 24c gekennzeichnet) auch auf Prozessobjekte 22a, 22b, 22c, 31a, 31b, 31c beziehen können, die in einem Prozessabbild 21, 30 eines anderen Operator Station Servers 15, 16 hinterlegt sind.

In analoger Funktionsweise zu dem ersten Operator Station Server 15 weist der Visualisierungsdienst 29 des zweiten Operator Station Servers 16 eine erste Softwarekomponente 34 und eine zweite Softwarekomponente 35 auf.

In FIG 3 ist ein beispielhaftes Anlagenbild 27 der ersten Teilanlage 1 und der zweiten Teilanlage 2 aus FIG 1 mit Blocksymbolen 36-40 dargestellt, die sich auf die technischen Objekte der ersten Teilanlage 1 und der zweiten Teilanlage 2 aus FIG 1 beziehen. Ein erstes Blocksymbol 36 korrespondiert zu dem ersten Ablassventil 5, ein zweites Blocksymbol 37 kor respondiert zu dem ersten Drucksensor 6, ein drittes Blocksymbol 38 korrespondiert zu dem Durchflusssensor 8, ein viertes Blocksymbol 39 korrespondiert zu dem Kompressor 7 und ein fünftes Blocksymbol 40 korrespondiert zu dem Einlassventil 9.

In FIG 3 sind zudem symbolische Darstellungen des Kompressors 7 ("M"), des Durchflusssensors 8 ("Pfeil") und des Einlassventils 9 ("Ventil") gezeigt, die jedoch keine Aussage über einen verfahrenstechnischen Zusammenhang der den Blocksymbolen 36-40 zugrunde liegenden verfahrenstechnischen Abhängigkeiten erlauben.

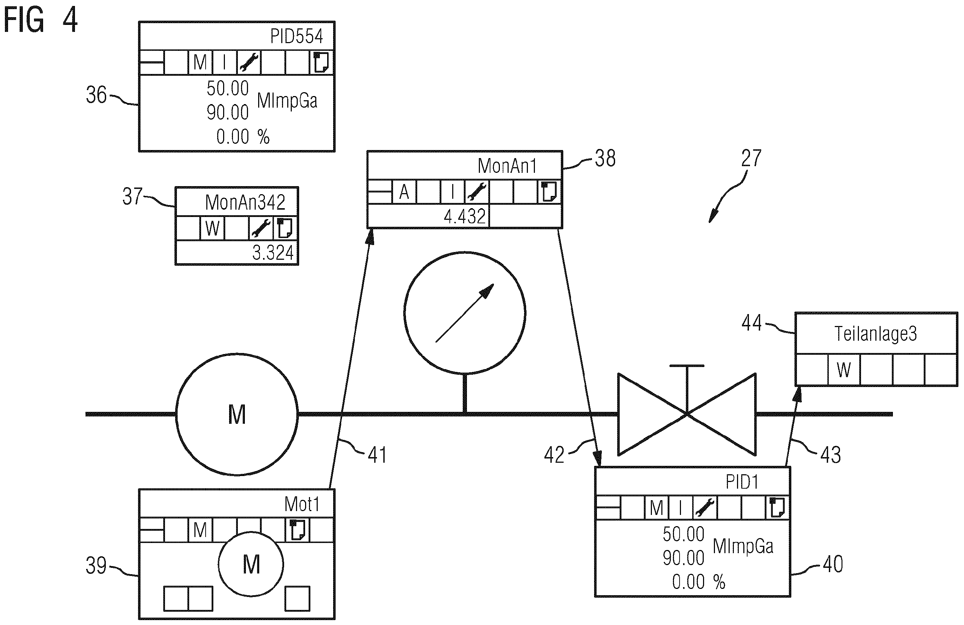

Es ist in FIG 3 zu erkennen, dass die beiden Blocksymbole 37, 38 Alarme der dazugehörigen Prozessobjekte visualisieren. Geht die Abhängigkeit zwischen den Prozessobjekten nicht unmittelbar aus dem Anlagenbild hervor - vor allem dann, wenn diese Abhängigkeit anlagenbildübergreifend ist - kann ein Operator der verfahrenstechnischen Anlage die vorliegend offenbarte dynamische Ermittlung und Visualisierung der Abhängigkeiten von Prozessobjekten in Anlagenbildern zur Laufzeit nutzen. Hierfür selektiert er beispielsweise eines der Blocksymbole 38-40 (alarmgebend oder nicht) mit einer Tastenkombination - das Ergebnis ist in FIG 4 zu sehen. Die durch die erste Softwarekomponente 26 ("DCS Domain Logic") ermittelte Abhängigkeit zwischen den, den Blocksymbolen 36-40 zugrunde liegenden, technischen Objekten wurde dynamisch mittels der zweiten Softwarekomponente 27 des ersten Operator Station Servers 15 zur Erweiterung des Anlagenbildes 27 verwendet, um den dem angewählten Blocksymbol zugrunde liegenden verfahrenstechnischen Strang zu kennzeichnen.

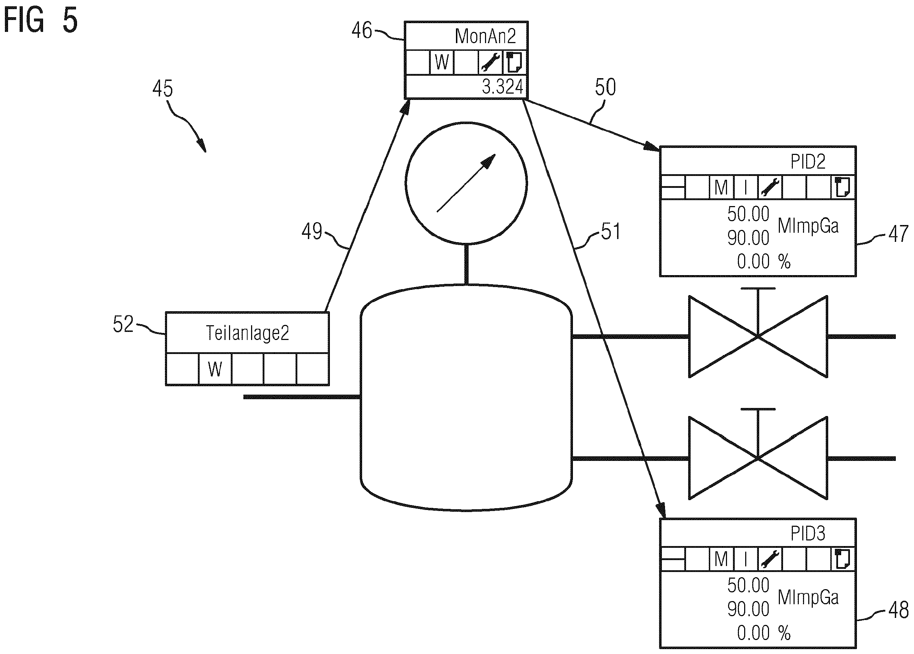

Hierzu wurde der verfahrenstechnische Datenfluss durch gerichtete Pfeile 41, 42, 43 visualisiert - die Farbe des Pfeiles (hier nicht erkennbar) entspricht dabei der Alarmklassenfarbe des höchstpriorisierten Alarms entlang des verfahrenstechnischen Stranges. Da sich der verfahrenstechnische Strang in einem weiteren Anlagenbild 45 (vgl. FIG 5 und 6) fortsetzt wurde zudem eine Darstellungsreferenz 44 (ein sogenannter "Bildwechselbutton", mit "Teilanlage 3" bezeichnet) eingefügt. Die Darstellungsreferenz 44 enthält dabei eine Auflistung der Alarme der Prozessobjekte, deren Blocksymbole 46, 47, 48 sich in dem weiteren Anlagenbild 45 befinden.

In FIG 5 ist ein beispielhaftes weiteres Anlagenbild 45 der dritten Teilanlage 3 aus FIG 1 mit Blocksymbolen 46, 47, 48 dargestellt, die sich auf die technischen Objekte der dritten Teilanlage 3 aus FIG 1 beziehen. Ein erstes Blocksymbol 46 korrespondiert zu dem zweiten Drucksensor 11, ein zweites Blocksymbol 47 korrespondiert zu dem zweiten Ablassventil 12 und ein drittes Blocksymbol 48 korrespondiert zu dem dritten Ablassventil 13.

Analog zu FIG 4 ist auch in FIG 5 der zuvor ermittelte verfahrenstechnische Datenfluss durch gerichtete Pfeile 49, 50, 51 visualisiert. Zudem weist das Anlagenbild 45 aus FIG 5 eine Darstellungsreferenz 52 ("Teilanlage 2") auf, die einen Wechsel zum Anlagenbild 27 ermöglicht und eine Auflistung der Alarme der Prozessobjekte, deren Blocksymbole 38-40 sich in dem Anlagenbild 27 gemäß FIG 4 befinden.

Um direkt zur Quelle eines in einer der Darstellungsreferenzen 44, 52 zu gelangen, kann der Operator auch direkt den Alarmstatus in den Darstellungsreferenzen 44, 52 anwählen. Die Darstellung des verfahrenstechnischen Strangs in den Anlagenbildern 27, 45 kann vom Operator auch wieder deaktiviert werden.

## Patentansprüche

1. Operator Station Server (15, 16) eines Leitsystems (14) einer verfahrenstechnischen Anlage, der ein computerimplementiertes Prozessabbild (21, 30) aufweist, wobei das computerimplementierte Prozessabbild (21, 30) zu einer Laufzeit der verfahrenstechnischen Anlage ein erstes computerimplementiertes Prozessobjekt (22a, 22b, 22c, 31a, 31b, 31c) , ein zweites computerimplementiertes Prozessobjekt (22a, 22b, 22c, 31a, 31b, 31c) und weitere computerimplementierte Prozessobjekte (22a, 22b, 22c, 31a, 31b, 31c) umfasst, die jeweils einem technischen Objekt (4, 5, 6, 7, 8, 9, 10, 11, 12, 13) der verfahrenstechnischen Anlage zugeordnet sind und mit diesem in Wirkverbindung stehen,
wobei der Operator Station Server einen Visualisierungsdienst (23) umfasst, der dazu ausgebildet ist, ein symbolisches Anlagenbild (27) an einen Operator Station Client (17) zur Visualisierung zu übertragen, um in dem Anlagenbild (27) aus dem ersten Prozessobjekt (22a, 22b, 22c, 31a, 31b, 31c) und dem zweiten Prozessobjekt (22a, 22b, 22c, 31a, 31b, 31c) erzeugte Blocksymbole darzustellen,
**dadurch gekennzeichnet, dass**
das erste Prozessobjekt (22a, 22b, 22c, 31a, 31b, 31c) eine strukturierte und richtungsorientierte Referenz (24a, 24b, 24c, 32a, 32b, 32c) auf das zweite Prozessobjekt (22a, 22b, 22c, 31a, 31b, 31c) aufweist,
wobei der Visualisierungsdienst (23) dazu ausgebildet und vorgesehen ist, die strukturierte und richtungsorientierte Referenz (24a, 24b, 24c, 32a, 32b, 32c) dazu zu verwenden, eine Abhängigkeit von aus dem ersten Prozessobjekt (22a, 22b, 22c, 31a, 31b, 31c) und dem zweiten Prozessobjekt (22a, 22b, 22c, 31a, 31b, 31c) in dem symbolischen Anlagenbild (27) erzeugten Blocksymbolen zu ermitteln, um einen verfahrenstechnischen Strang für das Anlagenbild (27) abzuleiten,
wobei der Visualisierungsdienst (23) weiterhin dazu ausgebildet ist, auch weitere Prozessobjekte (22a, 22b, 22c, 31a, 31b, 31c) für die Ableitung des verfahrenstechnischen Strangs miteinzubeziehen, von denen im Anlagenbild (27) keine Blocksymbole angezeigt werden, wobei für die weiteren Prozessobjekte (22a, 22b, 22c, 31a, 31b, 31c) die Anlagenbilder (27) ermittelt werden, in denen die weiteren Prozessobjekte (22a, 22b, 22c, 31a, 31b, 31c) vorhanden sind,
und wobei der Visualisierungsdienst (23) weiterhin dazu ausgebildet ist, Alarme für alle Blocksymbole zu berechnen und zu aktualisieren, und mit den ermittelten Anlagenbildern (27) und Alarmen zur Laufzeit Bildwechselbuttons im aktuell geöffneten Anlagenbild (27) anzulegen, um entlang des abgeleiteten verfahrenstechnischen Stranges von Anlagenbild (27) zu Anlagenbild (27) navigieren zu können.

2. Operator Station Server (15, 16) gemäß Anspruch 1, in dem Informationen darüber hinterlegt sind, welcher Art die Wirkverbindung zwischen den beiden, dem ersten Prozessobjekt (22a, 22b, 22c, 31a, 31b, 31c) und dem zweiten Prozessobjekt (22a, 22b, 22c, 31a, 31b, 31c) zugeordneten, technischen Objekten (24a, 24b, 24c, 32a, 32b, 32c) ist.

3. Operator Station Server (15,16) gemäß einem der vorangegangenen Ansprüche, der einen Operator Station Client (17) aufweist, wobei der Operator Station Client (17) dazu vorgesehen und ausgebildet ist, während einer Laufzeit der verfahrenstechnischen Anlage Visualisierungsinformationen von dem Operator Station Server (15, 16) zu empfangen, um wenigstens das erste Prozessobjekt (22a, 22b, 22c, 31a, 31b, 31c) und das zweite Prozessobjekt (22a, 22b, 22c, 31a, 31b, 31c) und die Wirkverbindung zwischen den beiden, dem ersten Prozessobjekt (22a, 22b, 22c, 31a, 31b, 31c) und dem zweiten Prozessobjekt (22a, 22b, 22c, 31a, 31b, 31c) zugeordneten technischen Objekten (4, 5, 6, 7, 8, 9, 10, 11, 12, 13) in Form von symbolischen Anlagenbildern visuell darzustellen,
und wobei der Operator Station Client (17) dazu vorgesehen und ausgebildet ist, während der Laufzeit der technischen Anlage wenigstens ein erstes symbolisches Anlagenbild (27, 45), das wenigstens ein zu dem ersten Prozessobjekt (22a, 22b, 22c, 31a, 31b, 31c) gehöriges Blocksymbol (36, 37, 38, 39, 40, 46, 47, 48) umfasst, und ein zweites symbolisches Anlagenbild (27, 45), das wenigstens ein zu dem zweiten Prozessobjekt (22a, 22b, 22c, 31a, 31b, 31c) gehöriges Blocksymbol (36, 37, 38, 39, 40, 46, 47, 48) umfasst, zu erzeugen,
wobei das erste Anlagenbild (27, 45) eine Darstellungsreferenz (44, 52) auf das zweite Anlagenbild (27, 45) aufweist, und umgekehrt,
wobei ein Operator der verfahrenstechnischen Anlage zwischen einer Anzeige der beiden Anlagenbilder (27, 45) wechseln kann, indem er die jeweilige Darstellungsreferenz (44, 52) anwählt.

4. Leitsystem (14) für eine verfahrenstechnischen Anlage, das wenigstens einen Operator Station Server (15, 16) gemäß einem der Ansprüche 1 bis 3 aufweist.

## Claims

1. Operator station server (15, 16) of a control system (14) of a process engineering plant, said server having a computer-implemented process image (21, 30), wherein the computer-implemented process image (21, 30) comprises, at runtime of the process engineering plant, a first computer-implemented process object (22a, 22b, 22c, 31a, 31b, 31c), a second computer-implemented process object (22a, 22b, 22c, 31a, 31b, 31c) and further computer-implemented process objects (22a, 22b, 22c, 31a, 31b, 31c), which are each assigned to a technical object (4, 5, 6, 7, 8, 9, 10, 11, 12, 13) of the process engineering plant and are operatively connected to the same,
wherein the operator station server comprises a visualisation service (23) which is designed to transmit a symbolic system image (27) to an operator station client (17) for visualisation, in order to display block symbols generated from the first process object (22a, 22b, 22c, 31a, 31b, 31c) and the second process object (22a, 22b, 22c, 31a, 31b, 31c) in the system image (27),
**characterised in that**
the first process object (22a, 22b, 22c, 31a, 31b, 31c) has a structured and direction-oriented reference (24a, 24b, 24c, 32a, 32b, 32c) to the second process object (22a, 22b, 22c, 31a, 31b, 31c),
wherein the visualisation service (23) is designed and provided to use the structured and direction-oriented reference (24a, 24b, 24c, 32a, 32b, 32c) to determine a dependency of block symbols generated from the first process object (22a, 22b, 22c, 31a, 31b, 31c) and the second process object (22a, 22b, 22c, 31a, 31b, 31c) in the symbolic system image (27) in order to derive a process engineering string for the system image (27),
wherein the visualisation service (23) is furthermore designed to also include further process objects (22a, 22b, 22c, 31a, 31b, 31c) for the derivation of the process engineering string, of which no block symbols are displayed in the system image (27), wherein the system images (27) in which the further process objects (22a, 22b, 22c, 31a, 31b, 31c) are present are determined for the further process objects (22a, 22b, 22c, 31a, 31b, 31c),
and wherein the visualisation service (23) is furthermore designed to calculate and update alarms for all block symbols, and with the determined system images (27) and alarms at runtime, to create image change buttons in the currently opened system image (27) in order to be able to navigate from system image (27) to system image (27) along the derived process engineering string.

2. Operator station server (15, 16) according to claim 1, in which information is stored about the type of operative connection between the two technical objects (24a, 24b, 24c, 32a, 32b, 32c) assigned to the first process object (22a, 22b, 22c, 31a, 31b, 31c) and the second process object (22a, 22b, 22c, 31a, 31b, 31c).

3. Operator station server (15,16) according to one of the preceding claims, having an operator station client (17), wherein the operator station client (17) is provided and designed to receive visualisation information from the operator station server (15, 16) during runtime of the process engineering plant in order to visually display at least the first process object (22a, 22b, 22c, 31a, 31b, 31c) and the second process object (22a, 22b, 22c, 31a, 31b, 31c) and the operative connection between the two technical objects (4, 5, 6, 7, 8, 9, 10, 11, 12, 13) assigned to the first process object (22a, 22b, 22c, 31a, 31b, 31c) and the second process object (22a, 22b, 22c, 31a, 31b, 31c) in the form of symbolic system images,
and wherein the operator station client (17) is provided and designed, during the runtime of the technical plant, to generate at least one first symbolic system image (27, 45) which comprises at least one block symbol (36, 37, 38, 39, 40, 46, 47, 48) belonging to the first process object (22a, 22b, 22c, 31a, 31b, 31c), and one second symbolic system image (27, 45) which comprises at least one block symbol (36, 37, 38, 39, 40, 46, 47, 48) belonging to the second process object (22a, 22b, 22c, 31a, 31b, 31c),
wherein the first system image (27, 45) has a display reference (44, 52) to the second system image (27, 45), and vice versa,
wherein an operator of the process engineering plant can alternate between a display of the two system images (27, 45) by selecting the respective display reference (44, 52).

4. Control system (14) for a process engineering plant having at least one operator station server (15, 16) according to one of claims 1 to 3.

## Revendications

1. Opérateur station serveur (15, 16) d'un système (14) de conduite d'une installation de technique de procédé, qui a une représentation (21, 30) de processus mise en oeuvre par ordinateur, dans lequel la représentation (21,30) de processus mise en oeuvre par ordinateur comprend un temps de marche de l'installation de technique de procédé, un premier objet (22a, 22b, 22c, 31a, 31b, 31c) de processus mis en oeuvre par ordinateur, un deuxième objet (22a, 22b, 22c, 31a, 31b, 31c) de processus mis en oeuvre par ordinateur et d'autres objets (22a, 22b, 22c, 31a, 31b, 31c) de processus mis en oeuvre par ordinateur, qui sont associés respectivement à un objet (4, 5, 6, 7, 8, 9, 10, 11, 12, 13) technique de l'installation de technique de procédé et qui sont en liaison d'action avec celui-ci,
dans lequel l'opérateur station serveur comprend un service (23) de visualisation, qui est constitué pour transmettre pour la visualisation une image (27) symbolique de l'installation à un opérateur station client (17) pour représenter, dans l'image (27) de l'installation, des symboles blocs produits à partir du premier objet (22a, 22b, 22c, 31a, 31b, 31c) de processus et du deuxième objet (22a, 22b, 22c, 31a, 31b, 31c) de processus,
**caractérisé en ce que**
le premier objet (22a, 22b, 22c, 31a, 31b, 31c) de processus a une référence (24a, 24b, 24c, 32a, 32b, 32c) structurée et orientée en direction au deuxième objet (22a, 22b, 22c, 31a, 31b, 31c) de processus,
dans lequel le service (23) de visualisation est constitué et prévu pour utiliser la référence (24a, 24b, 24c, 32a, 32b, 32c) structurée et orientée en direction, pour déterminer une dépendance de symboles blocs produits, à partir du premier objet (22a, 22b, 22c, 31a, 31b, 31c) de processus et du deuxième objet (22a, 22b, 22c, 31a, 31b, 31c) de processus, dans l'image (27) symbolique de l'installation, afin de déduire une chaîne de technique de procédé pour l'image (27) de l'installation,
dans lequel le service (23) de visualisation est constitué en outre pour incorporer également d'autres objets (22a, 22b, 22c, 31a, 31b, 31c) de processus pour la déduction de la chaîne de technique de procédé, dont il n'est pas indiqué de symbole bloc dans l'image (27) de l'installation, dans lequel, pour les autres objets (22a, 22b, 22c, 31a, 31b, 31c) de processus, on détermine les images (27) de l'installation, dans lesquelles les autres objets (22a, 22b, 22c, 31a, 31b, 31c) de processus sont présents, et dans lequel le service (23) de visualisation est constitué en outre pour calculer des alertes pour tous les symboles blocs et pour les mettre à jour et pour mettre, avec les images (27) d'installation déterminées et les alertes au temps de marche, des boutons de changement d'image dans l'image (27) de l'installation ouverte en cours, afin de pouvoir naviguer d'une image (27) d'installation à une image (27) d'installation, le long de la chaîne de technique de procédé déduite.

2. Opérateur station serveur (15, 16) suivant la revendication 1, dans lequel on met en mémoire des informations sur le type de liaison d'action entre les deux objets (24a, 24b, 24c, 32a, 32b, 32c) techniques associés au premier objet (22a, 22b, 22c, 31a, 31b, 31c) de processus et au deuxième objet (22a, 22b, 22c, 31a, 31b, 31c) de processus.

3. Opérateur station serveur (15, 16) suivant l'une des revendications précédentes, qui a un opérateur station client (17), dans lequel l'opérateur station client (17) est prévu et constitué pour, pendant un temps de marche de l'installation de technique de procédé, recevoir des informations de visualisation de l'opérateur station serveur (15, 16), afin de représenter visuellement sous la forme d'images symboliques de l'installation, au moins le premier objet (22a, 22b, 22c, 31a, 31b, 31c) de processus et le deuxième objet (22a, 22b, 22c, 31a, 31b, 31c) de processus et la liaison d'action entre les deux objets (4, 5, 6, 7, 8, 9, 10, 11, 12, 13) techniques associés au premier objet (22a, 22b, 22c, 31a, 31b, 31c) de processus et au deuxième objet (22a, 22b, 22c, 31a, 31b, 31c) de processus,
et dans lequel l'opérateur station client (17) est prévu et constitué pour, pendant le temps de marche de l'installation technique, produire au moins une première image (27, 45) symbolique de l'installation, qui comprend au moins un symbole bloc (36, 37, 38, 39, 40, 46, 47, 48) appartenant au premier objet (22a, 22b, 22c, 31a, 31b, 31c) de processus et une deuxième image (27, 45) symbolique de l'installation, qui comprend au moins un symbole bloc (36, 37, 38, 39, 40, 46, 47, 48) appartenant au deuxième objet (22a, 22b, 22c, 31a, 31b, 31c) de processus, dans lequel la première image (27, 45) de l'installation a une référence (44, 52) de représentation à la deuxième image (27, 45) de l'installation et inversement,
dans lequel un opérateur de l'installation de technique de procédé peut échanger entre un affichage des deux images (27, 45) d'installation en choisissant la référence (44, 52) de représentation respective.

4. Système (14) de conduite d'une installation de technique de procédé, qui a au moins un opérateur station serveur (15, 16) suivant l'une des revendications 1 à 3.
